(19) Europäisches Patentamt

European Patent Office

Office européen des brevets

(11) **EP 0 650 034 B1**

(12) **EUROPÄISCHE PATENTSCHRIFT**

(45) Veröffentlichungstag und Bekanntmachung des Hinweises auf die Patenterteilung:
**21.07.1999  Patentblatt 1999/29**

(51) Int Cl.⁶: **G01F 1/66**

(21) Anmeldenummer: **94115757.0**

(22) Anmeldetag: **06.10.1994**

(54) **Durchflussmesser nach dem Ultraschall-Prinzip**

Ultrasonic flowmeter

Débitmètre à ultrasons

(84) Benannte Vertragsstaaten:
**AT CH DE DK FR GB IT LI NL SE**

(30) Priorität: **25.10.1993  DE 4336368**

(43) Veröffentlichungstag der Anmeldung:
**26.04.1995  Patentblatt 1995/17**

(73) Patentinhaber: **SIEMENS AKTIENGESELLSCHAFT**
**80333 München (DE)**

(72) Erfinder:
- **Vontz, Thomas, Dr.**
  **D-81539 München (DE)**
- **Mágori, Valentin**
  **D-81539 München (DE)**

(56) Entgegenhaltungen:
EP-A- 0 172 676          EP-A- 0 392 294
EP-A- 0 559 938          WO-A-91/14925
DE-U- 9 205 130          US-A- 2 931 223

- **SENSORS AND ACTUATORS A, Bd.2, August 1993, LAUSANNE CH Seiten 135 - 140 A. VON JENA, E.A. 'ULTRASOUND GAS-FLOW METER FOR HOUSEHOLD APPLICATION'**

**Beschreibung**

Die Erfindung betrifft einen Massendurchflußmesser auf der Basis eines Ultraschalldurchflußmessers.

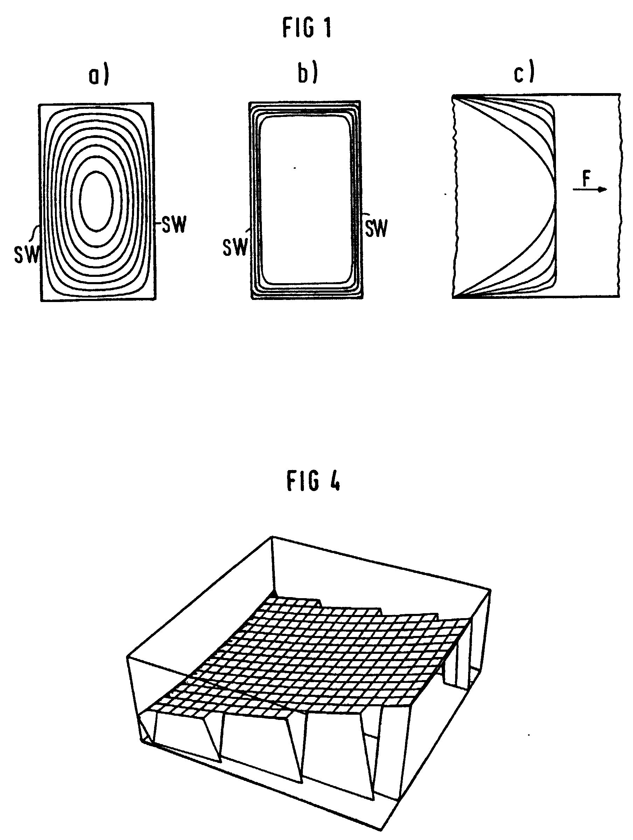

Bei der Durchflußmessung von bewegten flüssigen oder gasförmigen Medien (Fluiden) mit Ultraschall besteht das Problem, daß das vom Empfänger (Ultraschallwandler) gelieferte Meßsignal nicht nur vom Durchfluß, sondern auch vom jeweiligen Strömungsprofil im Meßrohr und der Art des durchströmenden Fluids abhängt. Je nach Strömungsgeschwindigkeit ergeben sich verschiedene Strömungsprofile. Das in Figur 1a gezeigte laminare Strömungsprofil in einem Rohr mit viereckigem Querschnitt tritt bei langsamer Strömungsgeschwindigkeit auf. Die im Inneren des Rohres eingezeichneten Linien veranschaulichen Bereiche gleicher Strömungsgeschwindigkeit. Laminare Strömungsprofile können durch eine parabolische Form, vgl. Figur 1c, beschrieben werden. Die höchsten Strömungsgeschwindigkeiten treten in der Rohrmitte auf. Je größer der Durchfluß, also je höher die Strömungsgeschwindigkeit ist, desto mehr nahert sich das Strömungsprofil einer Kastenform an. Figur 1b zeigt ein turbulentes Strömungsprofil, das bei hohen Strömungsgeschwindigkeiten auftritt. In weiten Bereichen des Rohres bleibt die Strömungsgeschwindigkeit in etwa gleich.

Die bisher bekannten Ultraschallwandler haben eine annähernd gaußförmige Empfindlichkeitsverteilung. Deren maximale Empfindlichkeit liegt in deren Zentrum. Zum Rand hin nimmt sie stark ab. Ein weiteres Problem bei den bisher bekannten Ultraschallwandlern liegt in der Divergenz der Wellenfront des ausgesandten US-Signals. Der Grad der Divergenz ist wandlerbedingt, läßt sich aber nicht unterdrücken. Zusätzlich wird die Empfindlichkeitsverteilung durch die Rohrwandeigenschaften stark beeinflußt, wenn durch die Rohrwand eingestrahlt wird.

Beschallt man nun mit einem Ultraschallwandler in einem Strömungskanal das bewegte Medium, wie dies aus der DE 40 10 148 A1 bekannt ist, um aus der Schallaufzeit oder mittels des Dopplereffekts die Strömungsgeschwindigkeit zu bestimmen, so wird, insbesondere bei laminarem Strömungsprofil, die in der Strömungskanalmitte auftretende höchste Strömungsgeschwindigkeit stärker bewertet als die am Rand des Strömungskanals auftretende niedrigere Strömungsgeschwindigkeit. Dies hat zur Folge, daß sich für jedes Strömungsprofil und für jedes Fluid ein anders Meßsignal ergibt, was dessen Auswertung erschwert.

Weiterhin ist bei dem in der DE 40 10 148 A1 beschriebenen Durchflußmesser von Nachteil, daß das Ultraschallsignal sich aufgrund des Meßrohraufbaus nicht nur w-förmig, sondern auch auf einem parasitären v-förmigen Weg ausbreiten kann und deshalb zusätzliche Maßnahmen zur Unterdrückung der daraus resultierenden Signalanteile erforderlich sind.

Aus DE-U-9205130 ist eine Gasverbrauch-Meßeinrichtung bekannt, bei der ein erster und ein zweiter Ultraschallwandler parallel zur Strömungskanalwand angeordnet sind, wobei jedem Ultraschallwandler ein Reflektor mit ebener Oberfläche gegenüberliegt.

Der Erfindung liegt die Aufgabe zugrunde, eine Vorrichtung zu schaffen, die eine höhere Meßgenauigkeit hat und deren Meßsignal nurmehr vom Durchfluß und nicht mehr von der Art des verwendeten Fluids und dem vorliegenden Strömungsprofil abhängt.

Die Meßvorrichtung eignet sich besonders für Strömungskanäle mit großem Durchmesser (> 50 mm).

Die Aufgabe wird erfindungsgemäß durch eine Vorrichtung gemäß dem Patentanspruch 1 gelost.

Vorteilhafte Weiterbildungen der Erfindung ergeben sich aus den abhängigen Ansprüchen.

In den Ultraschallwellenweg werden hohlspiegelförmige Reflektoren eingebracht. Die Orientierung von jedem Reflektor ist so gewählt, daß dessen Brennpunkt mit dem Zentrum der Abstrahlfläche des Ultraschallwandlers zusammenfällt. Damit wird erreicht, daß die auf den hohlspiegelförmigen Reflektor treffenden Ultraschallwellen gleichphasig und parallel zueinander reflektiert werden.

Anhand der Figuren soll die Erfindung näher erläutert werden.

| | |
|---|---|
| Figur 1a, b, c | zeigt ein laminares und ein turbulentes Strömungsprofil im Strömungskanalquerschnitt und mögliche Strömungsprofile im Strömungskanal in der Seitenansicht. |
| Figur 2 | zeigt den prinzipiellen Aufbau der Meßvorrichtung. |
| Figur 3 | zeigt die geometrischen Zusammenhänge der im Strömungskanal angebrachten hohl spiegel förmigen Reflektoren. |
| Figur 4 | zeigt ein Ausführungsbeispiel eines hohlspiegelförmigen Reflektors. |
| Figur 5 und 6 | zeigen weitere Möglichkeiten zur Anordnung der US-Wandler. |

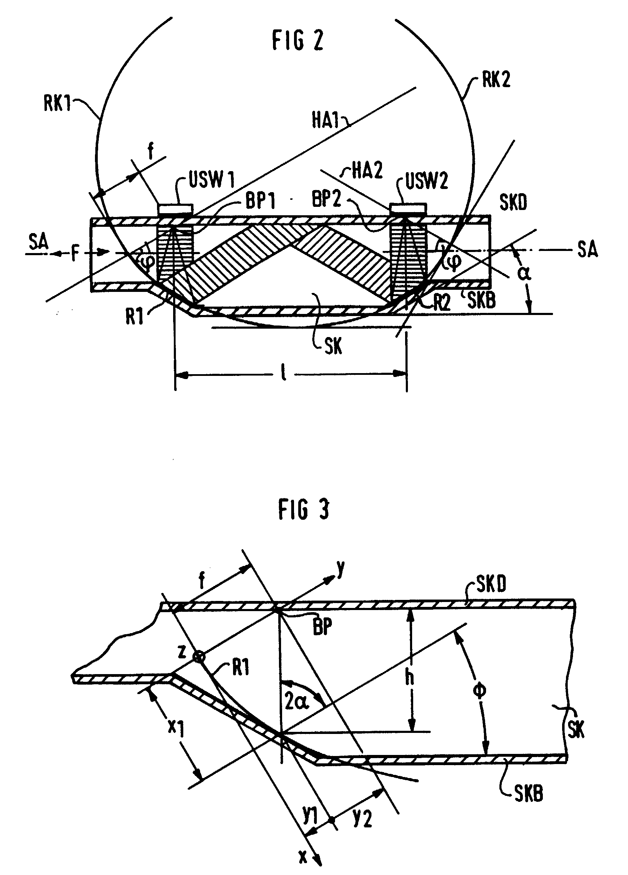

An den Wänden des in beliebiger Richtung F durchflossenen Strömungskanals SK (vergl. Figur 2) sind zwei in alternierender Folge als Sender und Empfänger zu betreibende Ultraschallwandler USW 1 und USW2 angeordnet. Auf der den Ultraschallwandlern USW1 und USW2 gegenüberliegenden Seite ist der Strömungskanal SK so geformt, daß das von den Ultraschallwandlern USW1, USW2 in den Strömungskanal SK eingestrahlte Signal sich w-förmig ausbreitet. Weiterhin sind im Strömungskanal SK zwei Reflektoren R1, R2 angebracht. Die Reflektoren R1 und R2 sind jeweils außerhalb des zentralen Bereichs liegende Teilflächen der Rotationsparaboloide RK1 und RK2, deren Hauptachsen HA1 und HA2 jeweils einen Winkel $\varphi$ mit der Symmetrieachse SA des Strömungskanals SK einschließen. Das vom Ultraschallwandler USW1 ausgesendete Ultraschallsignal wird am ersten Reflektor R1, an der Strömungskanaldecke SKD und am zweiten Reflektor R2 reflektiert und trifft dann auf den Empfänger, den Ultraschallwandler USW2. Weil die Ultraschallwandler USW1, USW2 sich im Brennpunkt BP1, BP2 der Rotationsparaboloide RK1 bzw. RK2 befinden, werden die Ultraschallwellen an dem dem US-Wandler USW1 gegenüberliegenden Reflektor R1 parallel reflektiert und an dem dem US-Wandler USW2 gegenüberliegenden Reflektor R2 in das Zentrum der Wandlerfläche fokussiert. Durch die obengenannte Maßnahme kommt es zu einer gleichmäßigen Bewertung der im Strömungskanal SK vorherrschenden Strömungsgeschwindigkeiten.

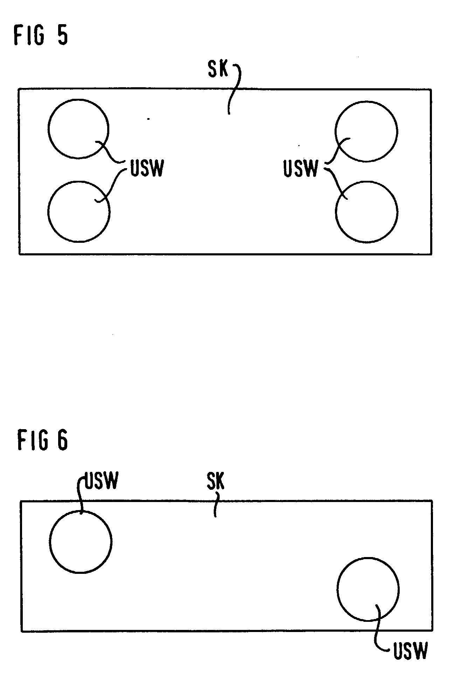

Als geeignete Reflektorgeometrie hat sich die in Figur 4 gezeigte Form erwiesen. Das Ausführungsbeispiel bezieht sich auf einen Strömungskanal SK mit rechteckigem Querschnitt und einseitiger Ausbuchtung (Fig. 2). Zur Festlegung der Reflektorgeometrie muß aus dem sich aus dem Ultraschallwandlerabstand 1 und der Höhe h ergebenden Reflexionswinkel $\alpha$, unter welchem die Reflexionsfläche des Strömungskanals SK geneigt ist, die Größe und Lage des Offset-Parabol-Spiegels R1 berechnet werden. Die Parameter des Spiegels R1 werden wie folgt berechnet (Fig. 3):

$$y_2 = \cos(2 \cdot \alpha) \cdot h$$

$$x_1 = \sqrt{h^2 - y_2^2}$$

$$y_1 = \frac{-y_2 + h}{2}$$

$$f = y_1 + y_2$$

Hierbei ist die Hohe h die sich aus dem Lot auf die Strömungskanaldecke SKD im Brennpunkt BP1 und der dazu schräg verlaufenden Reflektorschnittfläche ergebende Entfernung. Der Fokusabstand ist mit f bezeichnet. Der Winkel $\varphi$ ist der zum Winkel $2\alpha$ komplementäre Winkel $\varphi = 90° - 2\alpha$. Die Form S(x,z) des hohlspiegelförmigen Reflektors R1 in Abhängigkeit der Ortskoordinaten x und z ergibt sich aus der Gleichung:

$$S(x,z) = \frac{x^2 + z^2}{4f}$$

Die Lage des Koordinatensystems für diese Beschreibung muß entsprechend der in der Figur 3 gezeigten gewählt werden. Die y-Achse des Koordinatensystems liegt parallel zur Hauptachse HA1 der parabolischen Raumkurve RK1. Entsprechendes gilt für die Lage des Reflektors R2 bezüglich des US-Wandlers USW2.

In dem Ausführungsbeispiel nach Fig. 2 wurde ein rechteckiger Strömungskanalquerschnitt gewählt. Genausogut ist ein quadratischer, runder oder ovaler Querschnitt denkbar. Bei rundem oder ovalem Querschnitt ist jedoch die Strömungskanalwand zwischen den beiden Ultraschallwandlern nicht mehr als Reflexionsfläche geeignet. Vielmehr sollte hier ein weiterer, jedoch ebener Reflektor angebracht werden.

Die erfindungsgemäße Meßvorrichtung ist nicht nur für die Durchflußmessung verschiedenster Flüssigkeiten geeignet, sondern auch für die Durchflußmessung verschiedenster Gase und auch für die, als Wärmezähler bezeichneten, Wasser-Durchflußmesser in Heiz-/Kühlsystemen.

Besonders bei Strömungskanälen mit großem Durchmesser (> 50 mm) kann die Erfindung vorteilhaft eingesetzt werden, da in diesem Fall das Verhältnis von Wandlerdurchmesser zu Strömungskanaldurchmesser klein wird (1:5...1:10). Dadurch bedingt unterscheiden sich die Reflexionswinkel vom Rand des Reflektors R1 zum Rand des Ultraschallwandlers nicht stark von denen bis zum Brennpunkt BP (dem Mittelpunkt des Ultraschallwandlers), d.h. die Spiegeleigenschaften werden besser genützt.

Im nachfolgenden sind Variationsmöglichkeiten zum Aufbau der erfindungsgemäßen Meßvorrichtung angegeben:

- Wandler verschiedener Durchmesser
- Verhältnis von Wandlerdurchmesser zu Strömungskanaldurchmesser klein (1:5...1:10), dient wie oben beschrieben zur Homogenisierung des Schallfeldes
- Verhältnis Wandlerdurchmesser zu Strömungskanaldurchmesser ähnlich (1:1...1:3), dient der Signal-Intensitätssteigerung
- Aufgesetzte und/oder eingesetzte Wandler
- Kombination mit Mehrstrahlverfahren bei größeren Nennweiten (> 50 mm), wie z.B. in Fig. 5 in der Draufsicht gezeigt
- Kombination mit Strahlführungen in "V", "W" oder anderer Zickzack Form.

- quadratischer Strömungskanalquerschnitt
- rechteckiger Strömungskanalquerschnitt
- Polygonströmungskanalquerschnitt (z.B. Sechseck)
- ovaler oder runder Strömungskanalquerschnitt
- kombinierte Strömungskanalquerschnitte

- Sende- u. Empfangswandler auf einer Seite des Strömungskanals
- Sende- u. Empfangswandler gegenüberliegend
- Sende- u. Empfangswandler axial versetzt, wie z. B. in der Draufsicht in Fig. 6 gezeigt
- mehrere Sende- u. Empfangswandler verteilt auf verschiedenen Wänden des Strömungskanals

Die Reflektoren können aus Metall oder aus Kunststoff, vorteilhafter Weise aus einem spritzgußfähigem Kunststoff bestehen.Nicht geeignet sind weiche Materialien wie z.B. Gummi.

Eine weitere Verbesserung der Meßgenauigkeit läßt sich durch eine Serienschaltung zweier Meßvorrichtungen erzielen. Die zweite Meßvorrichtung ist dabei um 90° um die Längsachse des Strömungskanals gegenüber der ersten Meßvorrichtung gedreht. Sinnvoller Weise wird ein derartiger Aufbau dann gewählt, wenn das Fluid schraubenförmig durch den Strömungskanal SK strömt, was beispielsweise durch zwei aufeinander folgende Leitungskrümmer verursacht werden kann.

Geeignete Ultraschallwandler haben vorteilhafter Weise einen Durchmesser kleiner als 10 mm. Die Betriebsfrequenz liegt bei ca. 2 MHz.

## Patentansprüche

1. Vorrichtung zur Durchflußmessung in einem Strömungskanal (SK) mit einem ersten Ultraschallwandler (USW1) und einem zweiten Ultraschallwandler (USW2), die parallel zur Strömungskanalwand angeordnet sind, wobei jedem Ultraschallwandler (USW1, USW2) jeweils im Strömungskanal (SK) ein Reflektor gegenüberliegt, und ein von einem Ultraschallwandler einstrahlbares Signal auf den jeweils anderen Ultraschallwandler trifft, dadurch **gekennzeichnet,**

   - daß ein Brennpunkt (BP1) eines dem ersten Ultraschallwandler (USW1) gegenüberliegenden hohlspiegelartigen ersten Reflektors (R1) auf der Wandlerfläche des ersten Ultraschallwandlers (USW1) liegt,
   - daß ein Brennpunkt (BP2) eines dem zweiten Ultraschallwandler (USW2) gegenüberliegenden hohlspiegelartigen zweiten Reflektors (R2) auf der Wandlerfläche des zweiten Ultraschallwandlers (USW2) liegt.

2. Vorrichtung nach Anspruch 1, dadurch **gekennzeichnet,** daß der erste hohlspiegelartige Reflektor (R1) die Form eines Rotationsparaboloids hat.

3. Vorrichtung nach Anspruch 1 oder 2, dadurch **gekennzeichnet,** daß der zweite hohlspiegelartige Reflektor (R2) die Form eines Rotationsparaboloids hat.

4. Vorrichtung nach einem der vorigen Ansprüche, dadurch **gekennzeichnet,** daß der Strömungskanal (SK) auf der, den Ultraschallwandlern (USW1, USW2) gegenüberliegenden Seite eine wannenförmige Vertiefung aufweist, in welcher die Reflektoren (R1, R2) angeordnet sind.

## Claims

1. Device for measuring flow in a flow channel (SK) having a first ultrasound transducer (USW1) and a second ultrasound transducer (USW2), which are arranged parallel to the wall of the flow channel, a reflector respectively facing each ultrasound transducer (USW1, USW2) in the flow channel (SK), and a signal that can be input by one ultrasound transducer respectively impinging on the other ultrasound transducer, characterized in that

   - a focal point (BP1) of a first reflector (R1), which faces the first ultrasound transducer (USW1) and is of the concave mirror type, lies on the transducer face of the first ultrasound transducer (USW1),
   - and a focal point (BP2) of a second reflector (R2), which faces the second ultrasound transducer (USW2) and is of the concave mirror type, lies on the transducer face of the second ultrasound transducer (USW2).

2. Device according to Claim 1, characterized in that the first reflector (R1) of the concave mirror type has the form of a paraboloid of rotation.

3. Device according to Claim 1 or 2, characterized in that the second reflector (R2) of the concave mirror type has the form of a paraboloid of rotation.

4. Device according to one of the preceding claims, characterized in that, on the opposite side from the ultrasound transducers (USW1, USW2), the flow channel (SK) has a trough-shaped recess in which the reflectors (R1, R2) are arranged.

## Revendications

1. Dispositif pour la mesure de débit dans un canal d'écoulement (SK) avec un premier convertisseur à ultrasons (USW1) et un deuxième convertisseur à ultrasons (USW2) qui sont disposés parallèlement à la paroi du canal d'écoulement, dans lequel un réflecteur fait face à chaque fois dans le canal d'écoulement (SK) à chaque convertisseur à ultrasons (USW1, USW2), et dans lequel un signal pouvant être émis par un convertisseur à ultrasons arrive à chaque fois sur l'autre convertisseur à ultrasons, caractérisé en ce que

- un point focal (BP1) d'un premier réflecteur (R1) en forme de miroir concave faisant face au premier convertisseur à ultrasons (USW1) se trouve sur la surface de convertisseur du premier convertisseur à ultrasons (USW1),
- un point focal (BP2) d'un deuxième réflecteur (R2) en forme de miroir concave faisant face au deuxième convertisseur à ultrasons (USW2) se trouve sur la surface de convertisseur du deuxième convertisseur à ultrasons (USW2).

2. Dispositif selon la revendication 1,
caractérisé en ce que
le premier réflecteur (R1) en forme de miroir concave a la forme d'un paraboloïde de révolution.

3. Dispositif selon la revendication 1 ou 2,
caractérisé en ce que
le deuxième réflecteur (R2) en forme de miroir concave a la forme d'un paraboloïde de révolution.

4. Dispositif selon l'une des revendications précédentes,
caractérisé en ce que
le canal d'écoulement (SK) présente sur la face opposée aux convertisseurs à ultrasons (USW1, USW2) un enfoncement en forme de cuvette dans lequel sont disposés les réflecteurs (R1, R2).

## FIG 1

a)

b)

c)

SW SW SW SW

F

## FIG 4

FIG 2

FIG 3

FIG 5

SK

USW

USW

FIG 6

USW

SK

USW